(19) Europäisches Patentamt
European Patent Office
Office européen des brevets

(11) **EP 1 862 939 A1**

(12) **EUROPEAN PATENT APPLICATION**

(43) Date of publication:
**05.12.2007 Bulletin 2007/49**

(51) Int Cl.:
***G06K 7/14*** *(2006.01)*     ***G06K 19/06*** *(2006.01)*

(21) Application number: **07009303.4**

(22) Date of filing: **09.05.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **29.05.2006 CN 200610021095**

(71) Applicant: **Shenzhen Syscan Technology Co., Ltd.**
**Shenzhen**
**Guangdong 518034 (CN)**

(72) Inventors:
• **Chang, Zhiguo**
  **Shenzhen**
  **Guangdong 518034 (CN)**
• **Lv, Yingfeng**
  **Shenzhen**
  **Guangdong 518034 (CN)**
• **Cheung, Wai**
  **Shenzhen**
  **Guangdong 518034 (CN)**

(74) Representative: **Beetz & Partner**
**Steinsdorfstrasse 10**
**80538 München (DE)**

(54) **The two-directional bar code symbol and its encoding & decoding method**

(57) This present invention discloses one type of two-dimensional bar code and its encoding and decoding method. The finro-dimensional bar code is represented as circular element modules (CEMs), between which there are spaces. As a CEM remains a CEM after deep defocusing imaging, it can be restored well to be the same shape as that of a CEM after the filtering by the Unsharp Mask. This design enables the image processing algorithm to become insensitive to the selection of the binarization threshold value. Since there is space between modules, it is less likely that the adjacent modules will stick together after binarization so that each module can be positioned independently. The present invention is very reliable for reading and decoding even under imaging conditions of deep defocusing and low illumination. Its features include easy-to-read, strong error correction capability and low requirement for reading devices, which makes it a potential popular application.

FIG. 1

EP 1 862 939 A1

**Description**

**[Domain of Technology]**

The present invention involves one type of two-dimensional bar code, the encoding method which is used to encode data to generate such two-dimensional bar code, and the decoding method which is used to decode such two-dimensional bar code symbol and restore it to data.

**[Background of Technology]**

The two-dimensional bar code is commonly composed of three parts: aspect mode zone, format information zone and data zone. The aspect mode zone directs image identification algorithm to position and identify bar code symbol; the format information zone stores relevant parameters that describe the format of the bar code symbol and data error correction information; and the data zone stores data that has been encoded after error encoding process.

The most promising application of the two-dimensional bar code is to capture two-dimensional bar code with mobile phone camera, and then using two-dimensional bar code decoding program on the mobile phone operating platform so as to obtain various value-added services. Most camera mobile phones do not have the functionality of microspur imaging and automatic focusing - even if they do have automatic focusing function, the decoding time will be increased as focus adjustment is a time-consuming process. Furthermore, camera mobile phone does not normally have flash function, thus dependent on the lights from the surrounding environments, which usually results in low level parameters such as image brightness, contrast and SNR. Therefore, camera mobile phones cannot provide efficient reading on conventional matrix bar code that is composed of rectangular modules, which can't help the two-dimensional bar code's expansion in commercial applications.

**[Description of the Invention]**

The objective of the present invention is to overcome the deficiency of the current technology, provide one type of two-dimensional bar code, and the encoding method which is used to encode data to generate such two-dimensional bar code, and the decoding method which is used to decode such two-dimensional bar code symbol and restore it to data. Its features include easy-to-read, strong error correction capability and low requirement for reading devices, which will make it a popular application.

In order to achieve the above objectives, the present invention has brought up one type of two-dimensional bar code, whose bar code symbols are element modules with different optical reflectance that are arranged on the fundus; and the said element modules are circular element modules (CEMs), between which there are spaces.

In the above said two-dimensional bar code, the said CEMs are solid CEMs with same sizes and same distances between each other, and the distance between the centers of two adjacent CEMs is larger than the diameter of a CEM.

In the above said two-dimensional bar code, the said bar code symbol has 12x9 CEMs, its shape proportion is 4:3 and it is surrounded with a close bar. There is a quiet zone with the width of four CEMs at the outermost region of said bar code symbol.

In the above said two-dimensional bar code, the said CEMs at the four corners of said bar code symbol are positioning element modules, and their coordinates are (0, 0), (11, 0), (0, 8), and (11, 8) respectively. The remainder of the element modules are divided into 13 groups: said coordinates (0, 1), (0, 2), (1, 0), (1, 1), (1, 2), (2, 0), (2, 1) and (2, 2) are Group 1; said coordinates (0, 3), (0, 4), (0, 5), (1, 3), (1, 4), (1, 5), (2, 4) and (2, 5) are Group 2; said coordinates (0, 6), (0, 7), (0, 8), (1, 6), (1, 7), (1, 8), (2, 6) and (2, 7) are Group 3; said coordinates (0, 9), (0, 10), (1, 9), (1, 10), (1, 11), (2, 9), (2, 10) and (2, 11) are Group 4; said coordinates (3, 0), (3, 1), (4, 0), (4, 1), (4, 2), (5, 0), (5, 1) and (5, 2) are Group 5; said coordinates (2, 3), (3, 2), (3, 3), (3, 4), (3, 5), (4, 3), (4, 4) and (4, 5) are Group 6; said coordinates (2, 8), (3, 6), (3, 7), (3, 8), (3, 9), (4, 6), (4, 7) and (4, 8) are Group 7; said coordinates (3,10), (3,11), (4,9), (4,10), (4,11), (5,9), (5,10) and (5,11) are Group 8; said coordinates (6,0), (6,1), (6,2), (7,0), (7,1), (7,2), (8,1) and (8,2) are Group 9; said coordinates (6,3), (6,4), (7,3), (7,4), (7,5), (8,3), (8,4) and (8,5) are Group 10; said coordinates (5,3), (5,4), (5,5), (5,6), (5,7), (5,8), (6,5) and (6,6) are Group 11; said coordinates (6,7), (6,8), (7,6), (7,7), (7,8), (8,6), (8,7) and (8,8) are Group 12; said coordinates (6,9), (6,10), (6,11), (7,9), (7,10), (7,11), (8,9) and (8,10) are Group 13.

Meanwhile, the present invention has brought up an encoding method for the above said two-dimensional bar code. The steps to decode the binary data stream and output the bar code symbol include the following: A. Segment the binary data stream into information data codewords that have specific bit length. B. The said information data codewords are operated using error correcting algorithm to produce error correction codeword. C. The said information data codewords and error correction codewords are turned into bar code symbol that contains CEMs as its element modules between which there are spaces.

In the above said encoding method, the said bar code symbol contains 12x9 CEMs, of which the four CEMs at the four corners are positioning elements. Among the rest 104 CEMs, the first 80 are used to store information data while the remaining 24 are used to store error correction data. The said error correction data codewords are generated by the following means: the 80 bit information data is divided into 10 groups with 8 bits in each group, thus 10 8-bit information data codewords are produced; and then these 10 codewords are operated using error correcting algorithm to create 3 8-bit error correction codewords. The Reed-Solomon error correcting algorithm is used for said error correction operation.

The present invention has also brought up a decoding method for the two-dimensional bar code which comprises the following steps: 1) capturing the image of the bar code symbol, 2) performing binarization processing on the captured bar code symbol image, 3) obtaining the border image by performing edge detection on the CEMs, 4) tracing the close bar of the border image, 5) CEMs identification, 6) distinguishing and eliminating those CEMs that belong to different bar code symbols, 7) positioning, 8) codeword restoration and error correction.

In the above said method, between step 1) and step 2), there is also step 1') Image enhancement processing of the captured bar code symbol.

In the above said method, the border pixel obtained from said edge detection process in said step 3) is defined as a pixel with a pixel value of zero whose 8 adjacent pixels include non-zero pixel(s); wherein the said edge detection is to obtain the border image by performing border identification on all pixels in the binarization image, and the border pixel is labeled as highest brightness 255 while the rest 0.

In the above said method, the process of tracing the close bar of the border image in the said step 4) includes:

    41) scanning the border image in the left-to-right and top-to-bottom direction until the first border pixel is met, which will be set as the start pixel of the border tracing; if there is no border pixel is found, it indicates the end of the processing;

    42) placing the coordinates of start pixel in array Q and labeling it as zero to indicate that it has been traced;

    43) identifying if any of the 8 pixels adjacent to the start pixel contains a border pixel; if yes, either one of the pixels will be selected randomly as the starting point of next tracing, and then jumping to step 42); otherwise, the tracing is ended, and the pixel coordinates list in array Q represents a close bar; cleaning the pixel coordinates list stored in array Q and jumping to 41).

In the above said method, the process of CEMs identification in the said step 5) includes:

    51) adding up the pixel X-coordinates of all border points of the close bar, and dividing the sum by the number of border points, which produces u - the pixel X-coordinate of the centre point of the close bar; then adding up the pixel Y-coordinates of all border points of the close bar, and dividing the sum by the number of border points, which produces v - the pixel X-coordinate of the centre point of the close bar;

    52) starting from the pixel coordinates (u, v) and scanning the diameter of the close bar in 4 directions, which produces 4 length values d1, d2, d3, and d4;

    52) averaging out the diameter d=(d1+d2+d3+d4)/4 and defining the circle normalization as N=|d-d1|/d + |d-d2|/d + |d-d3|/d + |d-d4|/d;

    54) calculating the N value for each close bar; discarding the close bar whose N value from the actual test result is larger than the set threshold $T_N$, the rest of the close bars are considered as the border of the bar code CEMs.

In the above said method, the process of distinguishing and eliminating those CEMs that belong to different bar code symbols in the said step 6) includes:

    61) obtaining the length difference of 2 circles: assuming that one circle's diameter is $D_1$ while the other $D_2$, then the length difference of these two circles will be Ldif=|$D_1$-$D_2$|/max($D_1$,$D_2$); assuming that the width of the bar code quiet zone is the total of diameters of M CEMs and the length difference of the circles is Ldif;

    62) selecting the CEM that is closest to the centre point of the image as the seed CEM; putting those CEMs that are less than M distant from this seed CEM and have a length difference Ldif less than the predefined value into the subgroup;

    63) after the first round of increment, using the CEMs that are newly added into to the group as seed CEMs to repeat the increment process until no new CEMs is to be added to the group.

In the above said method, the positioning process in the said step 7) includes:

    71) finding the positioning CEM at the four corners of the bar code symbol;

    72) setting the coordinates of the positioning CEM at the four corners;

    73) calculating the coordinates of each CEM using the coordinate correction formula.

The specific process in the said step 71) includes: calculating the smallest enclosing rectangle of the CEM group based on the close bar coordinates of each CEM, and drawing a horizontal line and a vertical line across the centre coordinates of this rectangle, which will divide the CEMs into 4 zones, i.e., top left, top right, bottom left and bottom right zones; each zone will have a spot that is most distant from the centre point of the rectangle and this spot will be the positioning CEM of this particular zone.

The specific process in the said step 72) includes: setting the coordinates of the positioning CEMs at the four corners in the bar code symbol as (0, 0), (11, 0), (0, 8) and (11, 8);

The specific process in the said step 73) includes: based on the coordinates correction formula

$$x' = K_0{}^*x + K_1{}^*x{}^*y + K_2{}^*y + K_3;$$

$$y' = K_4{}^*x + K_5{}^*x{}^*y + K_6{}^*y + K_7;$$

where (x', y') is the coordinates of each CEM, while (x, y) is the coordinates of the origin in the image; substituting the coordinates of the positioning CEMs at the four corners in the bar code symbol and their coordinates in the image into the above formula, which will produce 8 linear equations each with 8 unknowns; the 8 coefficients $K_0{\sim}K_7$ can be obtained by resolving this system of equations; an equation of coordinates transformation is created by substituting $K_0{\sim}K_7$ to the equations. Calculating the CEM's coordinates in the bar code symbol after substituting the centre coordinates of each CEM into the system of equations.

The specific process in the said step 8) includes: setting the value for each bit of the codeword based on the codeword bit arrangement of the bar code CEMs during the encoding process, and each CEM's coordinates in the bar code symbol; the codewords that match any of the CEMs will have a bit value of 1, otherwise 0; using Reed-Solomon error correcting algorithm to process the codewords; data characters will be generated after successful error correction.

The two-dimensional bar code in the present invention is represented as circular element modules (CEMs), between which there are spaces. As a CEM remains a CEM after deep defocusing imaging, it can be restored well to be the same shape as that of a CEM after the filtering by the Unsharp Mask. This design enables the image processing algorithm to become insensitive to the selection of the binarization threshold, for the reason that although the threshold will affect the size of the CEM after binarization, the centre coordinates of the CEM will not shift with the change of the threshold, furthermore, since there is space between modules, it is less likely that the adjacent modules will stick together after binarization so that each module can be positioned independently. The present invention is very reliable for reading and decoding even under the imaging conditions of deep defocusing and low illumination. Its features include easy-to-read, strong error correction capability and low requirement for reading devices, which makes it a potential popular application.

The CEMs of the two-dimensional bar code can select two colours with one as background colour and the other front ground colour. Sufficient difference is maintained between the brightness of the front ground colour and that of the background colour so as to ensure the bar code readability. Its 4:3 shape proportion is also adapted to the height and width of the image generated by mobile phone camera, thus all image pixels can be utilized in a most effective way. In the mean time, it only needs to determine whether it has turned 180 degrees, thus reduce half of the calculation to identify the bar code direction and increase the decoding speed, compared with the square bar code.

**[Description of Drawings]**

| | |
|---|---|
| **Figure 1** | Illustration of a two-dimensional bar code symbol. |
| **Figure 2** | Flow chart of the decoding process. |
| **Figure 3** | Original two-dimensional bar code image captureed during the decoding process. |
| **Figure 4** | Enhanced image of the original two-dimensional bar code image in Figure 3. |
| **Figure 5** | Illustration of the image after binarization of the enhanced image in Figure 4. |
| **Figure 6** | Border image after the edge detection of the image in Figure 5. |
| **Figure 7** | Illustration of the outcome image after the close bar tracing on the border image. |
| **Figure 8** | Illustration of the CEM identification on the outcome image after the close bar tracing. |
| **Figure 9** | Reconstructed two-dimensional bar code symbol. |
| **Figure 10** | Illustration of how to define a certain pixel's adjacent pixels during the edge detection. |

**[Detailed Implementation]**

The following paragraphs provide a further detailed description of the present invention exemplified with detailed implementation and the attached drawings.

This design adopts circular element modules (CEM), between which there are spaces. As a CEM remains a CEM after deep defocusing imaging, it can be restored well to be the same shape as that of a CEM after the filtering by the Unsharp Mask. This design enables the image processing algorithm to become insensitive to the selection of the binarization threshold, for the reason that although the threshold affects the size of the CEM after binarization, the centre coordinates of the CEM will not shift with the change of the threshold, furthermore, since there is space between modules, it is less likely that the adjacent modules will stick together after binarization so that each module can be positioned independently.

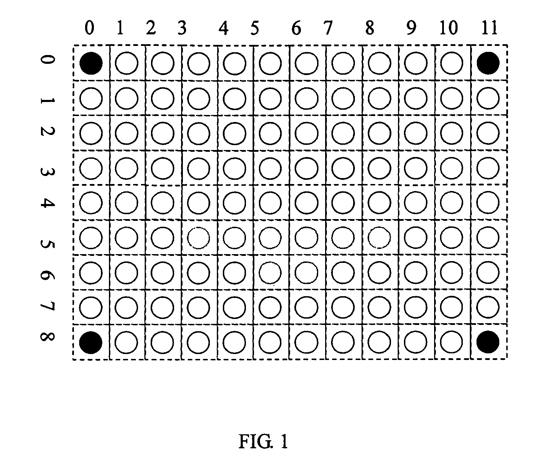

As shown in Figure 1, the targeted bar code is composed of 12 x 9 solid CEMs with same sizes and same distances between each other. The distance between the centres of said two adjacent CEMs is larger than the diameter of a CEM. The CEM can select two colours with one as background colour and the other front ground colour. Sufficient difference is maintained between the brightness of the front ground colour and that of the background colour to ensure the bar code readability. Multiple colours can also be adopted for the CEMs. Its 4:3 shape proportion is also compactable with the height and width of the image generated by mobile phone camera, thus all image pixels can be utilized in a most effective way. In the mean time, it only needs to determine whether it has turned 180 degrees, thus reduces half of the calculation to identify the bar code direction, compared with the rectangular bar code.

The four CEMs at the four corners of the bar code symbol are set to be front ground colour, while the rest 104 CEMs are used to store data. The front ground colour CEMs store bit '1', while the background colour CEMs store bit '0'. The 104 CEMs can store 104 bit data in total, the first 80 of which are used to store valid data while the remaining 24 bit store error correction data. Error correction data is generated by the following means: the 80 bit information data is divided into 10 groups with 8 bits in each group, thus 10 8-bit information data codewords will be produced. These 10 codewords are then operated using Reed-Solomon error correction algorithm of GF (256) to create 3 8-bit error correction codewords (24 bit in total). The 13 codewords are arranged in a way as shown in Figure 1, where the adjacent 8 element modules with the same colour store one codeword. The colours are simply to label the grouped codewords and have nothing to do with its reading. 3 error correction codewords can correct error of only one codeword. In other words, 3 error correction codewords can correct errors of only 8 element modules that belong to the same codeword. Without regard to the defacement on the bar code, this error correction capability is sufficient (the one-dimensional bar code that has only the check functionality can also be used effectively.) In order to utilise the correction capability of the 24 redundant bits, BCH correction codes can be selected to correct up to 11 bit data in any position by using the 24 BCH check bits, and thus a bar code symbol even with defacement of 10% area can also be readable.

The requirement for the quiet zone: the quiet zone is the close-by surrounding area of the bar code symbol. Decoding requires a two-dimensional reading device and has certain requirements for the quiet zone to ensure successful decoding. The present invention does not set up special identification and positioning mode; thus the width of four CEMs must be maintained for the quiet zone. In order to diminish the requirements for the size of the quiet zone, a close bar can be added to the bar code symbol as an aspect for identification.

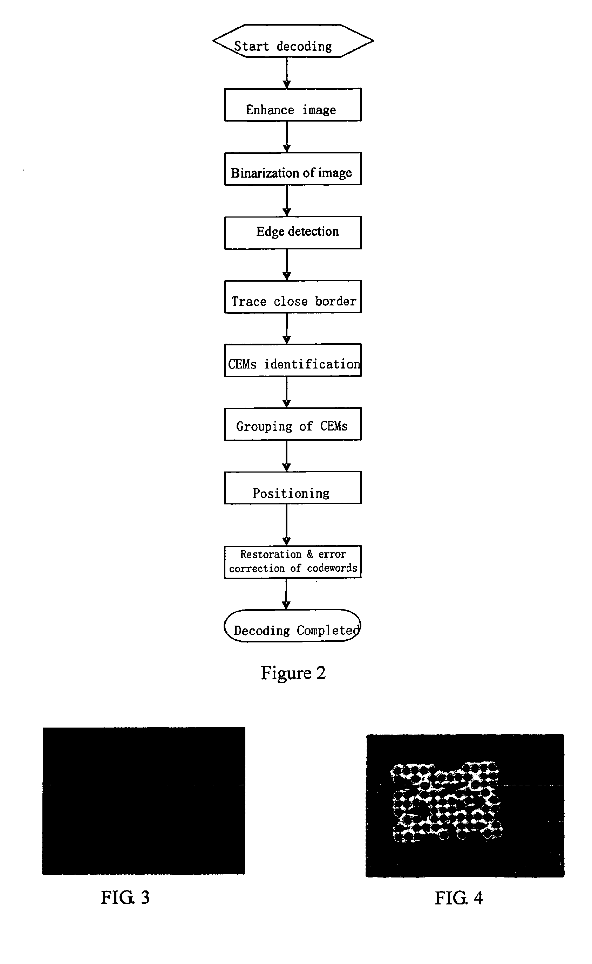

As shown in Figure 2, the decoding process is defined as identification of the bar code symbol from the image taken with mobile phones and restoration of the encoded data from a bar code. The image is composed of two-dimensional pixel matrix. In order to standardize the expression, the images taken with the mobile phones are set to be 8 bit gray scale images, in which every pixel's brightness is defined with a 8-bit numeral. The value ranges from 0 to 255, while the brightness of the corresponding images ranges from the darkest to the whitest.

### I .Image Enhancement

The bar code image taken in short shooting distance with a mobile phone, as shown in Figure 3, is blurry and has low contrast. As the targeted aspects of the CEMs in the image are inconspicuous and difficult to identify, the image needs to be enhanced. Unsharp Mask algorithm is used to enhance images, which is often used in digital image processing domain to enhance images. Its theory is to apply two-directional Gaussian Lowpass Filtering on the original image to obtain a blurry image, which will be removed from the original image to achieve an image with enhanced contrast, as shown in Figure 4. If the original image is F(x, y), and image U (x, y) is achieved after applying Gaussian Lowpass Filtering, then the enhanced image will be V(x,y) = F(x,y) + K □ (F(x,y) - U(x,y)), where K is the amplification coefficient, and the empiric values range from 1 to 4. The larger the K is, the more effective the enhancement, but the noise in the image will also be zoomed in.

### II. Binarization

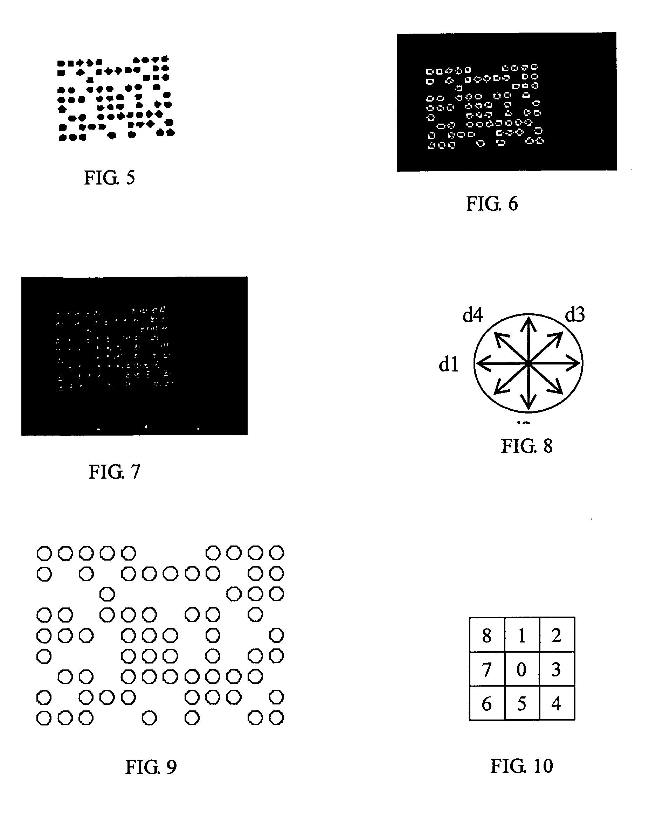

The enhanced image requires binarization processing. Set a threshold value T (0<T<255), and the pixels that has a brightness larger than T are classified as White while the others Black. As the pixel brightness has a larger dynamic range after the image enhancement, where background brightness is close to a maximum value of 255 and the brightness of the CEM pixels is close to a minimum value of 0, it is easy to choose a static or dynamic threshold T. The image after binarization processing is shown in Figure 5.

### III.Edge Detection

Edge detection is applied to the image after binarization processing. The edge is defined as pixels with a pixel value of zero whose 8 adjacent pixels include non-zero pixel(s). The definition of a certain pixel's adjacent pixels is shown in Figure 10, where the pixel is numbered 0, with its adjacent pixels numbered from 1 to 8. If a pixel is the border pixel then it is labeled as the maximum brightness 255, otherwise 0. Edge detection is to obtain the border image by performing border identification on all pixels in the image after binarization processing. The outcome image after the edge detection on each element module is shown in Figure 6.

### IV. Close Bar Tracing

Close bar tracing is operated on the border image obtained from the edge detection in the above said step 3. The steps are:

a. scanning the border image in the left-to-right and top-to-bottom direction until the first border pixel is met, which will be set as the start pixel of the border tracing. If there is no border pixel is found, it indicates the end of the processing.

b. placing the start pixels coordinates in array Q and labeling it as zero to indicate it has been traced.

c. identifying if any of the 8 pixels adjacent to the start pixel contains a border pixel; if yes, either one of the pixels will be selected randomly as the starting point of next trace, then jumping to step b; otherwise, the tracing is ended, and the pixel coordinates list in array Q represents a close bar as well as the border of the targeted CEMs to be selected. Cleaning the pixel coordinates list stored in array Q and jumping to step a.

As shown in Figure 7, the border of the CEM image is detected at the end of the processing, but at the same time part of the dark noise spots is mixed in the outcome.

### V.CEM Identification

This step is intended to eliminate part of the noise data from the detection outcome from step 4, which means discarding the non-circle close bar. The identification of the noise data is based on the geometric aspects of circles. As for a close bar, add up the pixel X - coordinates of all border points of the close bar, and divide the sum by the number of border points, which produces u - the pixel X - coordinate of the centre point of the close bar; then add up the pixel Y - coordinates of all border points of the close bar, and divide the sum by the number of border points, which produces v - the pixel Y - coordinate of the centre point of the close bar. Start from the pixel coordinates (u, v) and scan the diameter of the close bar in 4 directions, which produces 4 length values d1, d2, d3, d4 as shown in Figure 8. Calculate the average diameter d= (d1+d2+d3+d4)/4 and define the circle normalization as N=|d-d1|/d + |d-d2|/d + |d-d3|/d + |d-d4|/d. The smaller the N value is, the more reliable that the close bar is a circle. Calculate the N value of each close bar. Discard the close bars whose N value from the actual test result is larger than the set threshold value $T_N$. The rest of the close bars are considered as the border of the bar code CEMs.

### Vi. Distinguish and Eliminate Those CEMs That Belong To Different Bar Code Symbols

Not all CEMs in the image belong to one two-dimensional bar code. Therefore it is necessary to collect a group of CEMs that belong to the same two-dimensional bar code. First of all, define the length difference of 2 circles: assume that one circle's diameter is $D_1$ while the other $D_2$. The length difference of these two circles will be Ldif=|$D_1$-$D_2$|/max ($D_1$, D2). The width of the bar code quiet zone is the total of diameters of M CEMs, which means that there must be a clear area that has a width of M CEM diameters around the bar code. There are different requirements for sizes of the quiet zones in different bar code system. Here the so-called Crystal Increment method is used to distinguish and eliminate those CEMs that belong to different bar code symbols

First, select the CEM that is closest to the centre point of the image as the seed CEM. Put those CEMs that are less than M distant from this seed CEM and have a length difference Ldif less than the predefined value into the subgroup. After the first round of increment, use the CEMs that are just put into the subgroup as seed CEMs to repeat the increment process until no new CEMs is to be added to the group.

By now, the bar code has been segmented from the image, and the CEMs of the bar code are also positioned. The following steps are to determine the coordinates of each CEMs in the bar code.

### VII.Positioning

Based on the close bar coordinates of each CEM in the image, calculate the smallest enclosing rectangle of the CEM group obtained from Step 6, and draw a horizontal line and a vertical line across the centre point of this rectangle, which will divide the CEMs into 4 zones: top left, top right, bottom left and bottom right zones. Each zone will have a spot that is most distant from the centre point of the smallest enclosing rectangle and such spot is just the positioning CEM of this particular zone. Thus, the image coordinates of the four positioning CEMs from the top, bottom, left and right of the bar code are determined.

The bar code symbol coordinates of the positioning CEMs at the four corners are set as (0, 0), (11, 0), (0, 8) and (11, 8). Based on the symbol coordinates and image coordinates of the four positioning CEMs', the following coordinate correction formulas can be worked out, and then the symbol coordinates of other CEMs can be determined by using such coordinate correction formulas worked out and the image coordinates of the center points of such other CEMs:

$$x' = K_0{}^*x + K_1{}^*x{}^*y + K_2{}^*y + K_3;$$

$$y' = K_4{}^*x + K_5{}^*x{}^*y + K_6{}^*y + K_7;$$

where $(x', y')$ is the symbol coordinates of each CEM, while $(x, y)$ is the image coordinates of the center point of the same CEM; substitute the symbol coordinates of the positioning CEMs at the four corners in the bar code symbol and their image coordinates into the above formulas, which will produce 8 linear equations each with 8 unknowns; the 8 coefficients $K_0 \sim K_7$ can be obtained by resolving this system of equations; the coordinate correction formulas are then worked out by substituting $K_0 \sim K_7$ to the equations. The symbol coordinates of each CEM can be then determined by substituting the image coordinates of the center of the same CEM into the coordinate correction formulas worked out. Normally, the results of x' and y' are not integers and should be rounded.

### Viii. Restoration and Error Correction of Codewords

As shown in Figure 9, set the value for each bit of the codeword based on the codeword bit arrangement of the bar code CEMs during the encoding process and each CEM's coordinates in the bar code symbol calculated in Step 7, the codewords that match any of the CEMs will have a bit value of 1; otherwise 0. Error correction processing on the codewords is performed using Reed-Solomon Error Correction algorithm. There are 3 error correction codewords among the 13 codewords, thus one error can be corrected. A codeword with only one error in any bit is regarded as an error. If the error correction processing is successfully completed, decoding is successful and 10 data codewords will be output.

### Claims

1. A type of two-dimensional bar code, whose bar code symbols are element modules with different optical reflectance that are arranged on the fundus, wherein said element module is a circular element module (CEM), between which there is space.

2. A two-dimensional bar code as recited in Claim 1, wherein said CEMs are solid CEMs with same sizes and same distances between each other.

3. A two-dimensional bar code as recited in Claim 1, wherein distance between the centres of said two adjacent CEMs is larger than the diameter of a CEM.

4. A two-dimensional bar code as recited in Claim 1, wherein said bar code symbol has 12x9 CEMs.

5. A two-dimensional bar code as recited in Claim 1, wherein said bar code symbol's shape proportion is 4:3.

6. A two-dimensional bar code as recited in Claim 1, wherein said bar code symbol is surrounded with a close bar.

7. A two-dimensional bar code as recited in Claim 1, wherein there is a quiet zone with the width of four CEMs at the outermost region of said bar code symbol.

8. A two-dimensional bar code as recited in Claim 4, wherein the CEMs at the four corners are positioning element modules, of which the coordinates are (0, 0), (11, 0), (0, 8), and (11, 8) respectively, wherein the remainder of the element modules are divided into 13 groups: said coordinates (0, 1), (0, 2), (1, 0), (1, 1), (1, 2), (2, 0), (2, 1) and (2, 2) are Group 1; said coordinates (0, 3), (0, 4), (0, 5), (1, 3), (1, 4), (1, 5), (2, 4) and (2, 5) are Group 2; said coordinates (0, 6), (0, 7), (0, 8), (1, 6), (1, 7), (1, 8), (2, 6) and (2, 7) are Group 3; said coordinates (0, 9), (0, 10), (1, 9), (1, 10), (1, 11), (2, 9), (2, 10) and (2, 11) are Group 4; said coordinates (3, 0), (3, 1), (4, 0), (4, 1), (4, 2), (5, 0), (5, 1) and (5, 2) are Group 5; said coordinates (2, 3), (3, 2), (3, 3), (3, 4), (3, 5), (4, 3), (4, 4) and (4, 5) are Group 6; said coordinates (2, 8), (3, 6), (3, 7), (3, 8), (3, 9), (4, 6), (4, 7) and (4, 8) are Group 7; said coordinates (3,10), (3,11), (4,9), (4,10), (4,11), (5,9), (5,10) and (5,11) are Group 8; said coordinates (6,0), (6,1), (6,2), (7,0), (7,1), (7,2), (8,1) and (8,2) are Group 9; said coordinates (6,3), (6,4), (7,3), (7,4), (7,5), (8,3), (8,4) and (8,5) are Group 10; said coordinates (5,3), (5,4), (5,5), (5,6), (5,7), (5,8), (6,5) and (6,6) are Group 11; said coordinates (6,7), (6,8), (7,6), (7,7), (7,8), (8,6), (8,7) and (8,8) are Group 12; said coordinates (6,9), (6,10), (6,11), (7,9), (7,10), (7,11), (8,9) and (8,10) are Group 13.

9. A two-dimensional bar code encoding method as recited in any claim of Claim 1 to Claim 8, comprising the following steps to encode the binary data stream and output the bar code symbol, wherein A: said binary data stream is segmented into information data codewords that have specific bit length, wherein B: said information data codewords are operated using error correcting algorithm to produce error correction codewords and wherein C: said information data codewords and error correction codewords are turned into bar code symbol that contains CEMs as its element modules between which there are spaces.

10. An encoding method as recited in Claim 9, wherein said bar code symbol contains 12x9 CEMs, of which the four elements at the four corners are positioning elements, wherein among the rest 104 CEMs, the first 80 are used to store information data while the remaining 24 are used to store error correction data.

11. An encoding method as recited in Claim 10, wherein said error correction data codewords are generated by the following means: the 80 bit information data is divided into 10 groups with 8 bits in each group, thus 10 8-bit information data codewords are generated, wherein these 10 codewords are operated using error correcting algorithm to create 3 8-bit error correction codewords.

12. An encoding method as recited in Claim 11, wherein the Reed-Solomon error correcting algorithm is used for said error correction operation.

13. An encoding method as recited in Claim 12, wherein said error correction codewords are based on BCH error correction code.

14. An two-dimensional bar code decoding method, comprising the following steps: 1) capturing the image of the bar code symbol, 2) performing binarization processing on the captured bar code symbol image, 3) obtaining the border image by performing edge detection on the CEMs, 4) tracing the close bar of the border image, 5) CEMs identification, 6) distinguishing and eliminating those CEMs that belong to different bar code symbols, 7) positioning, 8) codeword restoration and error correction.

15. An decoding method as recited in Claim 14, wherein, between said step 1) and step 2), there is also step 1') Image enhancement processing of the captured bar code symbol.

16. An decoding method as recited in Claim 14, wherein, the border pixel obtained from said edge detection process in said step 3) is defined as a pixel with a pixel value of zero whose 8 adjacent pixels include non-zero pixel(s); said edge detection is to obtain the border image by performing border identification on all pixels in the binarization image, and the border pixel is labeled as highest brightness 255 while the rest 0.

17. An decoding method as recited in Claim 14, wherein, the process of tracing the close bar of the border image in said step 4) includes:

41) from top-to-bottom scanning each line of the border image in the left-to-right direction until the first border pixel is met, which will be set as the start pixel of the border tracing; if there is no border pixel is found, it indicates the end of the processing;

42) placing the coordinates of start pixel in array Q and set the start pixel value to zero to indicate that it has been traced; and

43) identifying if any of the 8 pixels adjacent to the start pixel is a border pixel; if yes, one of the border pixels will be selected randomly as the starting point of next tracing, and then jumping to step 42); otherwise, the tracing is ended, and the pixel coordinates listed in array Q represents a close bar; store the pixel coordinates list and clean the array Q and jump to step 41).

18. A decoding method as recited in Claim 14, wherein, the process of CEMs identification in said step 5) includes:

51) adding up the pixel X-coordinates of all border points of the close bar, and dividing the sum by the number of border points, which produces u - the pixel X-coordinate of the centre point of the close bar; then adding up the pixel Y-coordinates of all border points of the close bar, and dividing the sum by the number of border points, which produces v - the pixel X-coordinate of the centre point of the close bar;

52) starting from the pixel coordinates (u, v) and scanning the diameter of the close bar in 4 directions, which produces 4 length values d1, d2, d3, and d4;

53) averaging out the diameter d= (d1+d2+d3+d4)/4 and defining the circle normalization as N=|d-d1|/d + |d-d2|/d + |d-d3|/d + |d-d4|/d; and

54) calculating the N value for each close bar; discarding the close bar whose N value from the actual test result is larger than the set threshold $T_N$, the rest of the close bars are considered as the border of the bar code CEMs.

19. A decoding method as recited in Claim 14, wherein the process of distinguishing and eliminating those CEMs that belong to different bar code symbols in said step 6) includes:

61) obtaining the length difference of 2 circles: assuming that one circle's diameter is $D_1$ while the other $D_2$, then the length difference of these two circles will be Ldif=|$D_1$-$D_2$|/max($D_1$,$D_2$); assuming that the width of the bar code quiet zone is the total of diameters of M CEMs and the length difference of the circles is Ldif;

62) selecting the CEM that is closest to the centre point of the image as the seed CEM; putting those CEMs that are less than M distant from this seed CEM and have a length difference Ldif less than the predefined value into the subgroup; and

63) after the first round of increment, using the CEMs that are newly added into to the group as seed CEMs to repeat the increment process until no new CEMs is to be added to the group.

**20.** A decoding method as recited in Claim 14, wherein the positioning process in said step 7) includes:

71) finding the positioning CEM at the four corners of the bar code symbol;
72) setting the coordinates of the positioning CEM at the four corners; and
73) calculating the coordinates of each CEM using the coordinate correction formula.

**21.** A decoding method as recited in Claim 14, wherein the process in said step 8) includes: according to the codeword bit arrangement of the bar code symbol during the encoding process and each CEM's coordinates in the bar code symbol we set the value for each bit of each codeword; any bit of codewords that match the CEMs will have the bit value of 1, otherwise 0; using Reed-Solomon error correcting algorithm to process the codewords, wherein data characters will be generated after successful error correction.

**22.** A decoding method as recited in Claim 20, wherein the specific process of said step 71) includes: calculating the smallest circum-rectangle of the CEM group based on the close bar coordinates of each CEM, and drawing a horizontal line and a vertical line across the centre coordinates of this rectangle, which will divide the CEMs into 4 zones, i.e., top left, top right, bottom left and bottom right zones; each zone will have a spot that is most distant from the centre point of the rectangle and this spot will be the positioning CEM of this particular zone.

**23.** A decoding method as recited in Claim 20 or 22, wherein the specific process of said step 72) includes: setting the coordinates of the positioning CEMs at the four corners in the bar code symbol as (0, 0), (11, 0), (0, 8) and (11, 8).

**24.** A decoding method as recited in Claim 20 or 23, wherein the specific process of said step 73) includes: using the coordinates correction formulas

$$x' = K_0 {}^* x + K_1 {}^* x {}^* y + K_2 {}^* y + K_3;$$

$$y' = K_4 {}^* x + K_5 {}^* x {}^* y + K_6 {}^* y + K_7;$$

where (x', y') is the symbol coordinates of each CEM in the bar code symbol, while (x, y) is the image coordinates of the center point of the same CEM in the image; substituting the symbol coordinates and the image coordinates of the positioning CEMs at the four corners in the bar code symbol into the above formulas; the 8 coefficients $K_0 \sim K_7$ can be obtained by resolving this system of equations; calculating the symbol coordinates of each CEM's in the bar code symbol by substituting the image coordinates of the center of the same CEM in the image into the above formulas.

FIG. 1

```
         ┌─────────────────────┐
         ⟨   Start decoding    ⟩
         └─────────────────────┘
                    │
                    ▼
         ┌─────────────────────┐
         │    Enhance  image   │
         └─────────────────────┘
                    │
                    ▼
         ┌─────────────────────┐
         │ Binarization of image│
         └─────────────────────┘
                    │
                    ▼
         ┌─────────────────────┐
         │    Edge detection   │
         └─────────────────────┘
                    │
                    ▼
         ┌─────────────────────┐
         │  Trace close border │
         └─────────────────────┘
                    │
                    ▼
         ┌─────────────────────┐
         │  CEMs identification│
         └─────────────────────┘
                    │
                    ▼
         ┌─────────────────────┐
         │   Grouping of CEMs  │
         └─────────────────────┘
                    │
                    ▼
         ┌─────────────────────┐
         │     Positioning     │
         └─────────────────────┘
                    │
                    ▼
         ┌─────────────────────┐
         │  Restoration & error│
         │ correction of codewords│
         └─────────────────────┘
                    │
                    ▼
         (  Decoding Completed )
```

Figure 2

FIG. 3

FIG. 4

FIG. 5

FIG. 6

FIG. 7

FIG. 8

FIG. 9

| 8 | 1 | 2 |
|---|---|---|
| 7 | 0 | 3 |
| 6 | 5 | 4 |

FIG. 10

**European Patent Office**

**EUROPEAN SEARCH REPORT**

Application Number

EP 07 00 9303

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/035935 A1 (TAKAHASHI SADAO [JP] ET AL) 26 February 2004 (2004-02-26) | 1-5,7,8, 14-17, 20,21,23 | INV.<br>G06K7/14<br>G06K19/06 |
| Y | <br>* paragraph [0001] - paragraph [0003] *<br>* paragraph [0065] - paragraph [0070] *<br>* paragraph [0170] - paragraph [0326] *<br>----- | 6,9-13 | |
| X | EP 1 087 330 A (OMRON TATEISI ELECTRONICS CO [JP]) 28 March 2001 (2001-03-28)<br>* paragraph [0018] - paragraph [0040] *<br>----- | 1-5,7,8 | |
| X | WO 2004/095348 A (DIGIMARC CORP [US]; JONES ROBERT [US]; KENEN LEO M [US]) 4 November 2004 (2004-11-04)<br>* paragraphs [0029], [0030] *<br>* paragraph [0062] - paragraph [0068] *<br>----- | 1-5,7,8 | |
| Y | US 5 541 396 A (RENTSCH FREDERIC [CH]) 30 July 1996 (1996-07-30)<br>* column 4, line 11 - line 32 *<br>----- | 6 | TECHNICAL FIELDS SEARCHED (IPC) |
| Y | EP 1 157 356 B1 (DATASTRIP IOM LTD [GB]) 18 August 2004 (2004-08-18)<br>* paragraph [0031] - paragraph [0036] *<br>* paragraph [0045] - paragraph [0058] *<br>----- | 9-13 | G06K |
| A | WO 02/35450 A (SILVERBROOK RES PTY LTD [AU]; SILVERBROOK KIA [AU]; LAPSTUN PAUL [AU];) 2 May 2002 (2002-05-02)<br>* page 10, line 9 - page 15, line 21 *<br>----- | 1-24 | |

The present search report has been drawn up for all claims

| Place of search | Date of completion of the search | Examiner |
|---|---|---|
| Munich | 27 August 2007 | Geiger, Hans-Walter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 07 00 9303

This annex lists the patent family members relating to the patent documents cited in the above-mentioned European search report.
The members are as contained in the European Patent Office EDP file on
The European Patent Office is in no way liable for these particulars which are merely given for the purpose of information.

27-08-2007

| Patent document cited in search report | | Publication date | Patent family member(s) | | Publication date |
|---|---|---|---|---|---|
| US 2004035935 | A1 | 26-02-2004 | US | 2006049260 A1 | 09-03-2006 |
| EP 1087330 | A | 28-03-2001 | US | 6533182 B1 | 18-03-2003 |
| WO 2004095348 | A | 04-11-2004 | CA | 2522551 A1 | 04-11-2004 |
| | | | EP | 1614064 A2 | 11-01-2006 |
| US 5541396 | A | 30-07-1996 | NONE | | |
| EP 1157356 | B1 | 18-08-2004 | AT | 274213 T | 15-09-2004 |
| | | | AU | 771943 B2 | 08-04-2004 |
| | | | AU | 3497200 A | 14-09-2000 |
| | | | BR | 0008501 A | 04-06-2002 |
| | | | CA | 2362743 A1 | 31-08-2000 |
| | | | CN | 1344399 A | 10-04-2002 |
| | | | DE | 60013101 D1 | 23-09-2004 |
| | | | DE | 60013101 T2 | 18-08-2005 |
| | | | EP | 1157356 A1 | 28-11-2001 |
| | | | JP | 2002538530 A | 12-11-2002 |
| | | | MX | PA01008579 A | 24-06-2003 |
| | | | WO | 0051072 A1 | 31-08-2000 |
| | | | US | 6560741 B1 | 06-05-2003 |
| | | | US | 2005138527 A1 | 23-06-2005 |
| WO 0235450 | A | 02-05-2002 | AU | 1025002 A | 06-05-2002 |
| | | | CN | 1471684 A | 28-01-2004 |
| | | | EP | 1336149 A1 | 20-08-2003 |
| | | | JP | 2004511378 T | 15-04-2004 |
| | | | US | 2005134869 A1 | 23-06-2005 |
| | | | US | 2004032500 A1 | 19-02-2004 |
| | | | US | 6859225 B1 | 22-02-2005 |
| | | | ZA | 200303181 A | 31-10-2003 |

EPO FORM P0459

For more details about this annex : see Official Journal of the European Patent Office, No. 12/82